# EUROPÄISCHE PATENTSCHRIFT

(11) **EP 3 189 243 B1**
(45) Veröffentlichungstag und Bekanntmachung des Hinweises auf die Patenterteilung: **25.09.2019**
(21) Anmeldenummer: 15756396.6
(22) Anmeldetag: 27.08.2015
(51) Int. Cl.: F16C 33/12, F16C 33/24, F16C 33/14

(54) **GLEITLAGER ODER TEIL DAVON, VERFAHREN ZUR HERSTELLUNG DESSELBEN UND VERWENDUNG EINER CUCRZR-LEGIERUNG ALS GLEITLAGERWERKSTOFF**
PLAIN BEARING OR PART THEREOF, METHOD FOR PRODUCING SAME AND USE OF A CUCRZR ALLOY AS A PLAIN BEARING MATERIAL
PALIER LISSE OU PARTIE DE CELUI-CI, PROCÉDÉ DE FABRICATION DE CELUI-CI ET UTILISATION D'UN ALLIAGE CUCRZR COMME MATÉRIAU DE PALIER LISSE

(30) Priorität: 03.09.2014 DE 102014217570
(43) Veröffentlichungstag der Anmeldung: 12.07.2017
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55131 Mainz (DE)
(74) Vertreter: Hoffmann Eitle
(86) Internationale Anmeldenummer: PCT/EP2015/069636
(87) Internationale Veröffentlichungsnummer: WO 2016/034484

(56) Entgegenhaltungen:
- EP-A2- 1 649 950
- JP-A- 2008 144 253

## Beschreibung

### Technisches Gebiet

Die vorliegende Erfindung betrifft ein Gleitlager oder ein Teil davon, wie beispielsweise eine Gleitlagerhälfte oder - buchse, wobei nachfolgend der Einfachheit halber nur auf ein Gleitlager Bezug genommen wird, und ein Verfahren zur Herstellung desselben sowie die Verwendung einer CuCrZr-Legierung als Gleitlagerwerkstoff. Ein solches Gleitlager zeichnet sich durch hohe Wärmeleitfähigkeit und gute mechanische Eigenschaften, Korrosionsbeständigkeit sowie Verarbeitbarkeit aus.

### Stand der Technik

Aus dem Stand der Technik ist die Nutzung von Kupferbasislegierungen als Gleitlagerwerkstoff bekannt.

So offenbart die GB 2 281 078 A die Nutzung eines Sinterkörpers als Lagerlauffläche, wobei der Sinterkörper aus einer Kupferbasislegierung, 5 bis 20 Gew.-% eines Übergangsmetalls und 0,5 bis 10 Gew.-% eines Halbmetalls besteht. Zudem sind bevorzugt 0,1 bis 0,8 Gew.-% mindestens eines Metalls aus der Gruppe Zr, Mo, Nb und A1 Bestandteil der Legierung.

Ferner können Kupfer-Chrom-Zirkonium-Legierungen zum Stand der Technik gezählt, wie zum Beispiel in der JP 2008 144253 A offenbart.

Eine Kupfer-Chrom-Zirkonium-Legierung mit 0,5 bis 1,2 Gew.-% Chrom, 0,03 bis 0,3 Gew.-% Zirkonium und Rest Kupfer ist beispielsweise unter der Werkstoffnummer CW106C gelistet. Dem entsprechenden Werkstoffdatenblatt des Deutschen Kupferinstituts (DKI) ist zu entnehmen, dass diese Legierung in der Elektrotechnik und im Maschinenbau als Kontaktwerkstoff und stromführende Federn, in der Schweiß- und Löttechnik (Elektroden, Elektrodenhalter und -schäfte, Düsen) sowie im Gerätebau Anwendung findet.

Aus der US 2006/0086437 A1 geht ein Verfahren zur Herstellung einer Kupfer-Chrom-Zirkonium-Legierung mit 0,1 bis 1,5 Gew.-% Chrom, 0,01 bis 0,25 Gew.-% Zirkonium und Rest Kupfer hervor, wobei das Verfahren die Schritte Stranggießen, Ziehen und Ausscheidungshärtung umfasst.

### Darstellung der Erfindung

Der Erfindung liegt die Aufgabe zugrunde, ein Gleitlager zur Verfügung zu stellen, welches eine hohe Lebensdauer aufweist. Die Lösung dieser Aufgabe erfolgt durch das im Anspruch 1 beschriebene Gleitlager, das Verfahren zur Herstellung des Gleitlagers nach Anspruch 7 und die Verwendung einer CuCrZr-Legierung als Gleitlagerwerkstoff nach Anspruch 21.

Die zumindest teilweise Nutzung einer CuCrZr-Legierung als Werkstoff für ein Gleitlager erhöht dabei maßgeblich die Haltbarkeit des erfindungsgemäßen Gleitlagers.

So ist durch die hohe Wärmeleitfähigkeit der CuCrZr-Legierung von 320 W/(mK) bei 200°C sowohl eine schnelle Ableitung von Reibungswärme als auch eine homogene Wärmeverteilung innerhalb des Werkstoffes gegeben, welche eine temperaturstabile Mikrostruktur gewährleistet. Zudem bilden sich in der CuCrZr-Legierung CrZr₃-Verbindungen, die die Verschleißbeständigkeit des Gleitlagers erhöhen. Schließlich weist die erfindungsgemäße Legierungskomposition eine hohe Korrosionsbeständigkeit auf. Erste Untersuchungen zeigen, dass für die Verarbeitung des erfindungsgemäßen Werkstoffs in vorteilhafter Weise keine aufwändigen Modifikationen an bestehenden Produktionsanlagen erforderlich sind. Bevorzugt besteht die CuCrZr-Legierung aus 0,01 bis 0,5 Gew.-% Zr, 0,01 bis 4,9 Gew.-% Cr, optional bis 15,0 Gew.-% Sn, optional 0,05 bis 0,25 Gew.-% Al, Mg, Ti und/oder Mn sowie als Rest Kupfer.

Bevorzugte Weiterbildungen sind in den weiteren Ansprüchen beschrieben.

So haben sich für die Elemente Chrom und Zirkonium Konzentrationsbereiche von 0,01 bis 0,5 Gew.-% Zr und 0,01 bis 4,9 Gew.-% Cr, bevorzugt bis 4,4 Gew.-% Cr, als vorteilhaft herausgestellt. In diesem Konzentrationsbereich werden ausreichend CrZr₃-Verbindungen gebildet und die Korrosionsbeständigkeit hinreichend erhöht, ohne dass die Wärmeleitfähigkeit der Kupferbasismatrix signifikant erniedrigt wird.

Mit Vorteil enthält die CuCrZr-Legierung zusätzlich 0,01 bis 15,0 Gew.-% Sn, da hierdurch die Festigkeit und Härte der Legierung weiter gesteigert werden kann, bei höheren Zinngehalten jedoch die Wärmeleitfähigkeit zu stark verringert wird.

Bevorzugt wird der Legierung zumindest eines der Elemente Al, Mg, Ti und/oder Mn im Konzentrationsbereich von jeweils 0,05 bis 0,25 Gew.-% zugesetzt. Die genannten Elemente wirken in vorteilhafter Weise als Korrosionsinhibitoren und vermindern dementsprechend die Korrosionsempfindlichkeit der Kupfermatrix, insbesondere wenn für eine möglichst homogene Verteilung der genannten Elemente in der Matrix gesorgt ist.

Die CuCrZr-Legierung weist eine Porosität von < 0,3 Volumenprozent auf, wodurch eine ausreichende Festigkeit garantiert wird.

Die Gleiteigenschaften und die Zerspanbarkeit des erfindungsgemäß hergestellten Gleitlagerwerkstoffes können in vorteilhafter Weise dadurch verbessert werden, dass Hartpartikel, wie z.B. Oxide, Karbide, Nitride und Phosphide, und/oder Feststoffschmiermittel, wie z.B. h-BN und Kohlenstoff, insbesondere Graphit, zugefügt werden. Ferner kann zumindest eines der spanbrechenden Elemente Tellur, Bismut, Blei und Schwefel als sogenannter Spanbrecher zugeführt werden. Bevorzugte Hartpartikel sind beispielsweise Al₂O₃, c-BN, MoSi₂, ZrO₂, SiO₂ und sämtliche Karbide der genannten, korrosionsverhindernden Metalle.

Die CuCrZr-Legierung wird mit Vorteil auf einen Substratrücken, bevorzugt einen Stahlrücken, aufgebracht. Ein derartiger Aufbau erlaubt es, die günstigen Eigenschaften der CuCrZr-Legierung an denjenigen Positionen des Gleitlagers zu nutzen, an denen diese benötigt werden, während weniger kritische Stellen aus kostengünstigerem Material gefertigt werden können.

Bevorzugt wird die CuCrZr-Legierung als Vollmaterial, bevorzugt zu Buchsen und Lagern, verarbeitet, da hierdurch die Schwachstelle der Haftung zwischen Substrat und CuCrZr-Legierung vermieden wird.

Während durch das Aufbringen der CuCrZr-Legierung mittels Walzplattieren auf einen Substratrücken sehr kostengünstig große Schichtdicken auf dem Substrat realisiert werden, können über ein galvanisches Verfahren und/oder ein Sputterverfahren die chemischen und physikalischen Eigenschaften der CuCrZr-Legierung sehr definiert eingestellt werden.

Bevorzugt wird die CuCrZr-Legierung durch ein Sinterverfahren, bestehend aus mindestens einem, bevorzugt zwei, Sintergängen, gebildet, da hierdurch in vorteilhafter Weise nachgelagerte Walz- und/oder Wärmebehandlungsschritte zur Gefügeeinstellung entfallen können.

Mit Vorteil folgt mindestens einem, bevorzugt jedem, Sintergang mindestens ein Walzstich, da hierdurch die Porosität verringert wird.

Es hat sich ferner herausgestellt, dass der neuartige Gleitlagerwerkstoff auf bestehenden Sinteranlagen vorteilhaft bei Sintertemperaturen von 950°C bis 1000°C, bevorzugt 950°C bis 980°C, verarbeitet werden kann.

Gemäß einer günstigen erfindungsgemäßen Ausgestaltung werden die funktionellen Zusätze über einen vorgeschalteten Mahl- und/oder Mischprozess eingebracht, so dass eine homogene Verteilung der Zusätze gewährleistet wird.

Das Sinterpulver wird vorteilhaft durch einen Verdüsungsprozess, bevorzugt von Reinelementen hergestellt. Besonders bevorzugt werden die Reinelemente zunächst zu einer Vorlegierung verschmolzen um anschließend diese Legierung zu verdüsen. Insbesondere Zr und Cr werden mit Vorteil als CuCr und CuZr verdüst, da somit die hohe Reaktivität der Reinelemente Cr und Zr umgangen werden kann. Durch den Verdüsungsprozess können die gewünschte Partikelgrößenverteilung und chemische Zusammensetzung in engen Toleranzen gesteuert werden.

Mit Vorteil werden zur Herstellung des Sinterpulvers bei der Produktion von gegossenem CuCrZr anfallende Späne verwendet, welches dadurch kosten- und ressourceneffizient produziert werden kann.

Eine Absenkung der Sintertemperatur ist in vorteilhafter Weise durch die bevorzugte gezielte Erhöhung des Feinanteils, d.h. Partikel von < 5 µm, auf mindestens 5% möglich. Dies bietet ferner den Vorteil, dass der technisch bedingte hohe Anteil an feinem Pulver im Rahmen der Erfindung genutzt werden kann, ohne die Fließeigenschaften negativ zu beeinflussen.

Beim Gießen der CuCrZr-Legierung kann dagegen mit Vorteil auf die Prozessschritte zur Pulverherstellung verzichtet werden.

Gemäß einer bevorzugten Ausgestaltung der Erfindung wird zumindest ein Teil des Gleitlagers, bevorzugt die CuCrZr-Legierung, einer Wärmebehandlung, bevorzugt Lösungsglühen, Warmaushärtung und/oder Weichglühen, unterzogen, um das Gefüge entsprechend der Nutzungsanforderungen einstellen zu können.

Bevorzugt wird außerdem zumindest ein Teil des Gleitlagers, bevorzugt die CuCrZr-Legierung, mechanisch bearbeitet, um beispielsweise die notwendigen Oberflächengüten oder Bauteildimensionen zu erreichen.

Sämtliche vorangehend und nachfolgend im Zusammenhang mit dem Gleitlager erwähnten Merkmale können auch bei dem erfindungsgemäßen Verfahren und der neuartigen Verwendung Anwendung finden und umgekehrt.

### Bevorzugte Ausführungsform

Gemäß einer bevorzugten Ausführungsform ist ein Gleitlager, bestehend aus einem Stahlrücken und einer darauf aufgebrachten Sinterschicht aus einer CuCrZr-Legierung vorgesehen. Zur Herstellung wird zunächst eine Sinterpulvermischung mit den Massenanteilen 1,0 Gew.-% Cr und 0,1 Gew.-% Zr sowie als Rest Kupfer hergestellt. Hierzu werden über eine Verdüsungsanlage Reinstoffe der Legierungselemente derart verdüst, dass eine Feinpartikelfraktion < 5µm von 10 Gew.-% entsteht. Die Sinterpulver werden gemischt, auf einem Stahlrücken kompaktiert und bei einer Temperatur von 950°C versintert. Nach dem ersten Sintergang folgt ein Walzstich sowie ein zweiter Sintergang bei 950°C, dem wiederum ein zweiter Walzstich folgt, so dass ein Werkstoff mit homogenem Gefüge und einer Porosität unter 0,3 Volumenprozent entsteht.

## Patentansprüche

1. Gleitlager oder Teil davon, das zumindest teilweise, bevorzugt vollständig, aus einer CuCrZr-Legierung besteht, die eine Porosität von < 0,3 Volumenprozent aufweist.

2. Gleitlager oder Teil davon nach Anspruch 1, **dadurch gekennzeichnet, dass**
die CuCrZr-Legierung aus 0,01 bis 0,5 Gew.-% Zr, 0,01 bis 4,9 Gew.-% Cr, bevorzugt bis 4,4 Gew-% Cr, sowie als Rest Kupfer und bis zu 0,5 Gew.-% nicht zu vermeidende Verunreinigungen besteht.

3. Gleitlager oder Teil davon nach Anspruch 1 oder 2, **dadurch gekennzeichnet, dass** die CuCrZr-Legierung zusätzlich 0,01 bis 15,0 Gew.-% Sn enthält.

4. Gleitlager oder Teil davon nach einem der vorangegangenen Ansprüche, **dadurch gekennzeichnet, dass**
die CuCrZr-Legierung zusätzlich Al, Mg, Ti und/oder Mn im Konzentrationsbereich von jeweils 0,05 bis 0,25 Gew.-% enthält.

5. Gleitlager oder Teil davon nach einem der vorangegangenen Ansprüche, **dadurch gekennzeichnet, dass** die CuCrZr-Legierung weitere funktionelle Zusätze wie Feststoffschmiermittel, bevorzugt h-BN und/oder Graphit, Hartteilchen, bevorzugt Oxide, Karbiden, Nitride und/oder Phosphide, Spanbrecher, bevorzugt Tellur, Bismut, Blei und/oder Schwefel, und/oder Korrosionsinhibitoren aufweist.

6. Gleitlager oder Teil davon nach einem der vorangegangenen Ansprüche, **dadurch gekennzeichnet, dass** die CuCrZr-Legierung auf einen Substratrücken, bevorzugt einen Stahlrücken, aufgebracht ist.

7. Verfahren zur Herstellung eines Gleitlagers oder eines Teils davon nach einem der Ansprüche 1 bis 6, das zumindest teilweise aus einer CuCrZr-Legierung gefertigt wird, wobei zumindest ein Teil des Gleitlagers, bevorzugt die CuCrZr-Legierung, einer Wärmebehandlung, bevorzugt Lösungsglühen, Warmaushärtung und/oder Weichglühen, unterzogen wird.

8. Verfahren zur Herstellung eines Gleitlagers oder eines Teils davon nach Anspruch 7, **dadurch gekennzeichnet, dass** funktionelle Zusätze wie Feststoffschmiermittel, bevorzugt h-BN und/oder C, Hartteilchen, bevorzugt Oxide, Karbiden, Nitride und/oder Phosphide, Spanbrecher, bevorzugt Tellur, Bismut, Blei und/oder Schwefel, und/oder Korrosionsinhibitoren eingebracht werden.

9. Verfahren zur Herstellung eines Gleitlagers oder eines Teils davon nach Anspruch 7 oder 8, **dadurch gekennzeichnet, dass** die CuCrZr-Legierung als Vollmaterial verarbeitet wird.

10. Verfahren zur Herstellung eines Gleitlagers oder eines Teils davon nach Anspruch 7 oder 8, **dadurch gekennzeichnet, dass** die CuCrZr-Legierung auf einen Substratrücken, bevorzugt einen Stahlrücken, aufgebracht wird.

11. Verfahren zur Herstellung eines Gleitlagers oder eines Teils davon nach Anspruch 10, **dadurch gekennzeichnet, dass** die CuCrZr-Legierung durch Walzplattieren, ein galvanisches Verfahren und/oder ein Sputterverfahren auf einen Substratrücken aufgebracht wird.

12. Verfahren zur Herstellung eines Gleitlagers oder eines Teils davon nach einem der Ansprüche 7 bis 10, **dadurch gekennzeichnet, dass** die CuCrZr-Legierung durch ein Sinterverfahren, bestehend aus mindestens einem, bevorzugt zwei, Sintergängen, gebildet wird.

13. Verfahren zur Herstellung eines Gleitlagers oder eines Teils davon nach Anspruch 12, **dadurch gekennzeichnet, dass** mindestens einem, bevorzugt jedem, Sintergang mindestens ein Walzstich folgt.

14. Verfahren zur Herstellung eines Gleitlagers oder eines Teils davon nach einem der Ansprüche 12 bis 13, **dadurch gekennzeichnet, dass** das Sintern bei Temperaturen von 950°C bis 1000°C, bevorzugt 950°C bis 980°C, erfolgt.

15. Verfahren zur Herstellung eines Gleitlagers oder eines Teils davon nach einem der Ansprüche 12 bis 14, **dadurch gekennzeichnet, dass** die funktionellen Zusätze wie Feststoffschmiermittel, bevorzugt h-BN und/oder C, Hartteilchen, bevorzugt Oxide, Karbiden, Nitride und/oder Phosphide, Spanbrecher, bevorzugt Tellur, Bismut, Blei und/oder Schwefel, und/oder Korrosionsinhibitoren über einen vorgeschalteten Mahl- und Mischprozess eingebracht werden.

16. Verfahren zur Herstellung eines Gleitlagers oder eines Teils davon nach einem der Ansprüche 12 bis 15, **dadurch gekennzeichnet, dass** das Sinterpulver durch einen Verdüsungsprozess, bevorzugt von Reinelementen und/oder dessen Vorlegierungen, hergestellt wird.

17. Verfahren zur Herstellung eines Gleitlagers oder eines Teils davon nach einem der Ansprüche 12 bis 16, **dadurch gekennzeichnet, dass** zur Herstellung des Sinterpulvers bei der Produktion von gegossenem CuCrZr anfallende Späne verwendet werden.

18. Verfahren zur Herstellung eines Gleitlagers oder eines Teils davon nach einem der Ansprüche 12 bis 17, **dadurch gekennzeichnet, dass** das Sinterpulver eine Feinpartikelfraktion < 5µm von über 5 Gew.-%, bevorzugt mindestens 10 Gew.-% aufweist.

19. Verfahren zur Herstellung eines Gleitlagers oder eines Teils davon nach einem der Ansprüche 7 bis 10, **dadurch gekennzeichnet, dass** die CuCrZr-Legierung durch ein Gussverfahren verarbeitet wird.

20. Verfahren zur Herstellung eines Gleitlagers oder eines Teils davon nach einem der Ansprüche 7 bis 19, **dadurch gekennzeichnet, dass** zumindest ein Teil des Gleitlagers, bevorzugt die CuCrZr-Legierung, mechanisch bearbeitet wird.

21. Verwendung eines Gleitlagerwerkstoffs zur Fertigung von mindestens einem Teil eines Gleitlagers, **dadurch gekennzeichnet, dass** der Gleitlagerwerkstoff aus einer CuCrZr-Legierung gemäß dem kennzeichnenden Teil eines der Ansprüche 1 bis 6 besteht.

## Claims

1. Plain bearing or part thereof, consisting at least in part, preferably entirely, of a CuCrZr alloy which has a porosity of < 0.3 volume percent.

2. Plain bearing or part thereof according to claim 1, **characterised in that** the CuCrZr alloy consists of 0.01 to 0.5 wt.% Zr, 0.01 to 4.9 wt.% Cr, preferably up to 4.4 wt.% Cr, as well as copper and up to 0.5 wt.% unavoidable impurities as the remainder.

3. Plain bearing or part thereof according to claim 1 or 2, **characterised in that** the CuCrZr alloy additionally contains 0.01 to 15.0 wt.% Sn.

4. Plain bearing or part thereof according to one of the preceding claims, **characterised in that** the CuCrZr alloy additionally contains Al, Mg, Ti and/or Mn in the concentration range in each case of 0.05 to 0.25 wt.%.

5. Plain bearing or part thereof according to one of the preceding claims, **characterised in that** the CuCrZr alloy has further functional additives such as solid lubricants, preferably h-BN and/or graphite, hard particles, preferably oxides, carbides, nitrides and/or phosphides, chip breakers, preferably tellurium, bismuth, lead and/or sulfur, and/or corrosion inhibitors.

6. Plain bearing or part thereof according to one of the preceding claims, **characterised in that** the CuCrZr alloy is applied to a substrate backing, preferably a steel backing.

7. Method for producing a plain bearing or a part thereof according to one of claims 1 to 6, which is manufactured at least partly from a CuCrZr alloy, at least a part of the plain bearing, preferably the CuCrZr alloy, being subjected to a heat treatment, preferably solution annealing, age hardening and/or soft annealing.

8. Method for producing a plain bearing or a part thereof according to claim 7, **characterised in that** functional additives such as solid lubricants, preferably h-BN and/or C, hard particles, preferably oxides, carbides, nitrides and/or phosphides, chip breakers, preferably tellurium, bismuth, lead and/or sulfur, and/or corrosion inhibitors are introduced.

9. Method for producing a plain bearing or a part thereof according to claim 7 or 8, **characterised in that** the CuCrZr alloy is processed as a solid material.

10. Method for producing a plain bearing or a part thereof according to claim 7 or 8, **characterised in that** the CuCrZr alloy is applied to a substrate backing, preferably a steel backing.

11. Method for producing a plain bearing or a part thereof according to claim 10, **characterised in that** the CuCrZr alloy is applied to a substrate backing by roll bonding, a galvanic process and/or a sputtering process.

12. Method for producing a plain bearing or a part thereof according to one of claims 7 to 10, **characterised in that** the CuCrZr alloy is formed by a sintering process consisting of at least one, preferably two, sintering passes.

13. Method for producing a plain bearing or a part thereof according to claim 12, **characterised in that** at least one, preferably each, sintering pass is followed by at least one rolling pass.

14. Method for producing a plain bearing or a part thereof according to one of claims 12 to 13, **characterised in that** the sintering takes place at temperatures of 950°C to 1000°C, preferably 950°C to 980°C.

15. Method for producing a plain bearing or a part thereof according to one of claims 12 to 14, **characterised in that** the functional additives such as solid lubricants, preferably h-BN and/or C, hard particles, preferably oxides, carbides, nitrides and/or phosphides, chip breakers, preferably tellurium, bismuth, lead and/or sulfur, and/or corrosion inhibitors are introduced by means of an upstream grinding and mixing process.

16. Method for producing a plain bearing or a part thereof according to one of claims 12 to 15, **characterised in that** the sintering powder is produced by means of an atomisation process, preferably of pure elements and/or the pre-alloys thereof.

17. Method for producing a plain bearing or a part thereof according to one of claims 12 to 16, **characterised in that** chips occurring in the production of cast CuCrZr are used to produce the sintering powder.

18. Method for producing a plain bearing or a part thereof according to one of claims 12 to 17, **characterised in that** the sintering powder has a fine particle fraction < 5 µm of over 5 wt.%, preferably at least 10 wt.%.

19. Method for producing a plain bearing or a part thereof according to one of claims 7 to 10, **characterised in that** the CuCrZr alloy is processed by means of a casting process.

20. Method for producing a plain bearing or a part thereof according to one of claims 7 to 19, **characterised in that** at least a part of the plain bearing, preferably the CuCrZr alloy, is machined.

21. Use of a plain bearing material to manufacture at least a part of a plain bearing, **characterised in that** the plain bearing material consists of a CuCrZr alloy according to the characterising part of one of claims 1 to 6.

## Revendications

1. Palier lisse ou partie de celui-ci, qui est constitué ou constituée au moins en partie, de manière préférée en totalité, d'un alliage de CuCrZr, qui présente une porosité de < 0,3 % en volume.

2. Palier lisse ou partie de celui-ci selon la revendication 1, caractérisé(e) en ce que
l'alliage de CuCrZr est constitué de 0,01 à 0,5 % en poids de Zr, de 0,01 à 4,9 % en poids de Cr, de manière préférée de jusqu'à 4,4 % en poids de Cr, ainsi que de cuivre en tant que reste et de jusqu'à 0,5 % en poids d'impuretés inévitables.

3. Palier lisse ou partie de celui-ci selon la revendication 1 ou 2, caractérisé(e) en ce que l'alliage de CuCrZr contient en supplément 0,01 à 15,0 % en poids de Sn.

4. Palier lisse ou partie de celui-ci selon l'une quelconque des revendications précédentes, caractérisé(e) en ce que
l'alliage de CuCrZr contient en supplément Al, Mg, Ti et/ou Mn dans la plage de concentration allant respectivement de 0,05 à 0,25 % en poids.

5. Palier lisse ou partie de celui-ci selon l'une quelconque des revendications précédentes, caractérisé(e) en ce que l'alliage de CuCrZr présente d'autres additifs fonctionnels tels que des lubrifiants solides, de manière préférée du h-BN et/ou du graphite, des particules dures, de manière préférée des oxydes, des carbures, des nitrures et/ou des phosphures, des brise-copeaux, de manière préférée du tellure, du bismuth, du plomb et/ou du soufre, et/ou des inhibiteurs de corrosion.

6. Palier lisse ou partie de celui-ci selon l'une quelconque des revendications précédentes, caractérisé(e) en ce que l'alliage de CuCrZr est appliqué sur une partie arrière de substrat, de manière préférée sur une partie arrière en acier.

7. Procédé servant à fabriquer un palier lisse ou une partie de celui-ci selon l'une quelconque des revendications 1 à 6, qui est produit ou produite au moins en partie à partir d'un alliage de CuCrZr, dans lequel au moins une partie du palier lisse, de manière préférée l'alliage de CuCrZr, est soumis à un traitement thermique, de manière préférée à un recuit de mise en solution, à un durcissement thermique et/ou à un recuit d'adoucissement.

8. Procédé servant à fabriquer un palier lisse ou une partie de celui-ci selon la revendication 7, **caractérisé en ce que** des additifs fonctionnels tels que des lubrifiants solides, de manière préférée du h-BN et/ou du C, des particules dures, de manière préférée des oxydes, des carbures, des nitrures et/ou des phosphures, des brise-copeaux, de manière préférée du tellure, du bismuth, du plomb et/ou du soufre, et/ou des inhibiteurs de corrosion sont introduits.

9. Procédé servant à fabriquer un palier lisse ou une partie de celui-ci selon la revendication 7 ou 8, **caractérisé en ce que** l'alliage de CuCrZr est transformé en matériau plein.

10. Procédé servant à fabriquer un palier lisse ou une partie de celui-ci selon la revendication 7 ou 8, **caractérisé en ce que** l'alliage de CuCrZr est appliqué sur une partie arrière de substrat, de manière préférée sur une partie arrière en acier.

11. Procédé servant à fabriquer un palier lisse ou une partie de ce dernier selon la revendication 10, **caractérisé en ce que** l'alliage de CuCrZr est appliqué par placage par laminage, par un procédé galvanique et/ou par un procédé de pulvérisation sur une partie arrière de substrat.

12. Procédé servant à fabriquer un palier lisse ou une partie de celui-ci selon l'une quelconque des revendications 7 à 10, **caractérisé en ce que** l'alliage de CuCrZr est formé par un procédé de frittage, constitué d'au moins un, de manière préférée deux, cycles de frittage.

13. Procédé servant à fabriquer un palier lisse ou une partie de celui-ci selon la revendication 12, **caractérisé en ce qu'**au moins une passe de laminage suit au moins un, de manière préférée chaque cycle de frittage.

14. Procédé servant à fabriquer un palier lisse ou une partie de celui-ci selon l'une quelconque des revendications 12 à 13, caractérisé ne ce que le frittage est effectué à des températures de 950 °C à 1000 °C, de manière préférée de 950 °C à 980 °C.

15. Procédé servant à fabriquer un palier lisse ou une partie de celui-ci selon l'une quelconque des revendications 12 à 14, **caractérisé en ce que** les additifs fonctionnels tels que des lubrifiants solides, de manière préférée du h-BN et/ou du C, des particules dures, de manière préférée des oxydes, des carbures, des nitrures et/ou des phosphures, des brise-copeaux, de manière préférée du tellure, du bismuth, du plomb et/ou du soufre, et/ou des inhibiteurs de corrosion, sont introduits par l'intermédiaire d'un processus de broyage et de mélange en amont.

16. Procédé servant à fabriquer un palier lisse ou une partie de celui-ci selon l'une quelconque des revendications 12 à 15, caractérisé ne ce que la poudre de frittage est fabriquée par un processus d'atomisation, de manière préférée d'éléments mononucléidiques et/ou de ses alliages mères.

17. Procédé servant à fabriquer un palier lisse ou une partie de celui-ci selon l'une quelconque des revendications 12 à 16, **caractérisé en ce que** pour fabriquer la poudre de frittage, des copeaux liés à la production du CuCrZr coulé sont utilisés.

18. Procédé servant à fabriquer un palier lisse ou une partie de celui-ci selon l'une quelconque des revendications 12 à 17, **caractérisé en ce que** la poudre de frittage présente une fraction de particules fines de < 5 µm à supérieure à 5 % en poids, de manière préférée d'au moins 10 % en poids.

19. Procédé servant à fabriquer un palier lisse ou une partie de celui-ci selon l'une quelconque des revendications 7 à 10, **caractérisé en ce que** l'alliage de CuCrZr est transformé par un procédé de coulée.

20. Procédé servant à fabriquer un palier lisse ou une partie de celui-ci selon l'une quelconque des revendications 7 à 19, **caractérisé en ce qu'**au moins une partie du palier lisse, de manière préférée l'alliage de CuCrZr, est usinée de manière mécanique.

21. Utilisation d'un matériau de palier lisse servant à produire au moins une partie d'un palier lisse, **caractérisée en ce que** le matériau de palier lisse est constitué d'un alliage de CuCrZr selon la partie caractérisante de l'une quelconque des revendications 1 à 6.
